# EUROPÄISCHE PATENTSCHRIFT

(11) **EP 2 616 837 B1**
(45) Veröffentlichungstag und Bekanntmachung des Hinweises auf die Patenterteilung: **20.08.2014**
(21) Anmeldenummer: 11760703.6
(22) Anmeldetag: 12.09.2011
(51) Int. Cl.: G01S 13/86, G01V 3/12

(54) **DETEKTORVORRICHTUNG AUS EINER KOMBINATION VON BODENRADAR UND METALLDETEKTOR**
DETECTING DEVICE CONSISTING OF A COMBINATION OF A GROUND PENETRATING RADAR AND A METAL DETECTOR
DISPOSITIF DÉTECTEUR CONSISTANT EN UNE COMBINAISON DE GÉORADAR ET DE DÉTECTEUR DE MÉTAUX

(30) Priorität: 13.09.2010 DE 102010045084
(43) Veröffentlichungstag der Anmeldung: 24.07.2013
(73) Patentinhaber: Rheinmetall Landsysteme GmbH, 29345 Unterlüß (DE)
(72) Erfinder: BROLL, Lutz, 29525 Uelzen (DE)
(74) Vertreter: Dietrich, Barbara
(86) Internationale Anmeldenummer: PCT/EP2011/004577
(87) Internationale Veröffentlichungsnummer: WO 2012/034677

(56) Entgegenhaltungen:
- WO-A1-2010/101630
- DE-A1-102004 007 315
- US-A- 5 680 048
- SATO M: "Dual Sensor ALIS for Humanitarian Demining and its Evaluation Test in Mine Fields in Croatia", GEOSCIENCE AND REMOTE SENSING SYMPOSIUM, 2008. IGARSS 2008. IEEE INTERNATIONAL, IEEE, PISCATAWAY, NJ, USA, 7. Juli 2008 (2008-07-07), Seiten II-181, XP031422117, ISBN: 978-1-4244-2807-6

## Beschreibung

Die Erfindung beschäftigt sich mit einem kombinierten Bodenradar und Metalldetektor zur Detektion von im Boden befindlichen Körpern metallischer als auch nichtmetallischer Art, insbesondere von Landminen und / oder Sprengfallen oder dergleichen. Um in einfacher Art und Weise metallische als auch nicht metallische Materialien / Körper / Objekte aufspüren zu können wird vorgeschlagen, beide Sensorsysteme konstruktiv miteinander zu vereinen, sodass sie als ein gemeinsames Gebilde bzw. als gemeinsame Baugruppe an einem Fahrzeug etc. angebracht werden können. Um das dabei auftretende Problem der Einflussnahme des Metalldetektors auf die Funktionsfähigkeit des Bodenradars zu lösen, wird nunmehr die Flächennormale des Metalldetektors in Richtung der Polarisation der elektrischen Feldstärke des ausgesandten bzw. empfangenen Radarpulses des Bodenradars ausgerichtet.

Für die insbesondere fahrzeuggestützte Detektion von vergrabenen Minen und Sprengfallen werden in der Regel Metalldetektoren und / oder Bodenradar eingesetzt. Beide Sensortypen sind dabei als Gruppe mehrerer nebeneinander angeordneter Einzelsensoren aufgebaut. Die Metalldetektoren dienen zur Detektion von metallischen Gegenständen im Boden, während das Bodenradar auch die Detektion von nichtmetallischen Gegenständen ermöglicht. Die bisher im Einsatz befindlichen Systeme arbeiten entweder mit nur einem der beiden Sensortypen oder befinden sich, um den Integrationsaufwand zu vermindern, an verschiedenen Stellen am Fahrzeug. So werden das Bodenradar beispielsweise vor der ersten Fahrzeugachse und der Metalldetektor hinter der ersten Fahrzeugachse eingebunden, um so auch die Beeinflussungen der beiden Sensorensysteme zu vermeiden. Dadurch wird eine gleichzeitige Detektion über die gesamte Fahrzeugbreite und darüber hinaus ermöglicht. Dieses hat jedoch den Nachteil, dass die Detektionsdaten der beiden Sensoren auf eine Position referenziert werden müssen. Dazu ist ein Navigationssystem erforderlich, welches in Echtzeit die Position beider Sensoren erfasst. Die Detektionsdaten des ersten Sensors werden zusammen mit dessen Positionsdaten zwischengespeichert und mit den Daten des zweiten Sensors zusammengeführt, wenn diese die entsprechende Position des ersten Sensors erreicht hat.

WO 2010/101 630 A1 offenbart eine Detektorvorrichung aus einer Kombination von Bodenradar und Metaldetekor.

Insbesondere die Detektion von nichtmetallischen Objekten ist von besonderem Interesse, da zwischenzeitlich Minen und Sprengfallen mit keinem oder nur einem geringen Metallanteil entwickelt werden. Grundsätzlich ist das Bodenradar in der Lage sowohl metallische als auch nichtmetallische Objekte zu erkennen. Jedoch ist die Eindringtiefe in den Boden für das Detektieren eingeschränkt.

Die Erfindung stellt sich die Aufgabe, eine kompakte Sensoreinheit aufzuzeigen, die einfacher am Fahrzeug bzw. am sich bewegenden Objekt integriert werden kann.

Gelöst wird die Aufgabe durch die Merkmale des Patentanspruchs 1. Vorteilhafte Ausführungen sind in den Unteransprüchen aufgelistet.

Der Erfindung liegt die Idee zugrunde, eine Kombination von Bodenradar und Metalldetektor zu einem kompakten Sensor zu schaffen, wobei der Metalldetektor die Eigenschaften bzw. Funktionssicherheit des Bodenradars nicht oder nur geringfügig beeinflusst. Der kompakte Sensor, d. h., das Bodenradar als auch der Metalldetektor, sind bevorzugt in einem gemeinsamen Gehäuse untergebracht, dass mittels einfacher Aufhängungen am Fahrzeug individuell und frei wählbar angebracht werden kann. Bevorzugt kann der kompakte Sensor nun auch vor dem Fahrzeug angebracht werden, sodass es zu einer Detektion des Gefahrenbereichs kommt, bevor das Fahrzeug darüber fährt. Eine Einbindung an ein unbemanntes Fahrzeug etc. wäre natürlich ebenfalls möglich, da nunmehr auch Gewicht eingespart wird.

Bei den Überlegungen zur Ideenfindung wurde davon ausgegangen, dass es für ein Bodenradar (GPR-Ground Penetrating Radar) von Vorteil ist, wenn es einem geringen Radarstreuquerschnitt unterliegt. Dadurch können Mehrfachreflexionen zwischen dem dicht über dem Boden geführten Bodenradar und der Bodenoberfläche vermieden werden, die bekanntlich unerwünscht sind, da diese die Nutzsignale aus dem Boden überlagern würden. Ein Metalldetektor seinerseits besteht aus einer Gruppe von Spulen, die zur Erregung und dem Empfang von Magnetfeldern dienen. Die Spulen sind in einer Ebene nebeneinander angeordnet.

Da ein zu detektierendes Metallobjekt in der Regel senkrecht zu dieser Ebene erwartet wird, liegt die Spulenebene für die Detektion von Metallobjekten im Boden in der Horizontalen. Eine Verschachtelung, d.h., konstruktive Verschmelzung, von Bodenradar und Metalldetektor würde in diesem Fall zu einer starken Erhöhung des Radarrückstrahlquerschnitts führen. Hier setzt die erfinderische Lösung an, nämlich, die Spulenebene des Metalldetektors, welche durch seine Drahtwindungen abschnittsweise eine leitende Fläche darstellt, senkrecht anstatt horizontal in der Bodenradarstruktur anzuordnen. Damit steht der elektrische Feldvektor der Radarpulswelle senkrecht zur Spulenebene des Metalldetektors, der Einfluss des Metalldetektors auf das Bodenradar wird minimiert. Bei der erfindungsgemäßen Lösung wird gewissermaßen die Eigenschaft elektromagnetischer Wellen ausgenutzt, die sich dann ungestört entlang einer dünnen (ideal) leitenden Fläche ausbreiten, wenn der elektrische Feldvektor der Wellen senkrecht zur leitenden Fläche steht.

Obwohl bei diesem kombinierten Bodenradar und Metalldetektor die Detektionsempfindlichkeit des Metalldetektors geringfügig reduziert wird, hat sich dieses von Vorteil erwiesen, da diese Kombination mit dem Bodenradar zur Reduzierung der Falschalarmrate beigetragen hat.

Anhand eines Ausführungsbeispiels mit Zeichnung soll die Erfindung näher erläutert werden.

Es zeigt:
- Fig. 1, 1a: einen Prinzipaufbau eines Bodenradars nach dem Stand der Technik,
- Fig. 2: eine Standardausführung eines Metalldetektors nach dem Stand der Technik,
- Fig. 3: eine Kombination des Bodenradars mit einem Metalldetektor,
- Fig. 4: eine Darstellung des Querschnitts durch einen Wicklungsabschnitt einer Empfangs-/Erregerspule mit Wicklung in der Ebene der Spule bzw. der Metalidetektoranordnung,
- Fig. 5: eine Metalldetektoranordnung (ohne Bodenradar) mit großer Erregerspule,
- Fig. 6: eine besondere Ausführungsform des kombinierten Systems bei einer winkeligen Bodenradarstruktur.

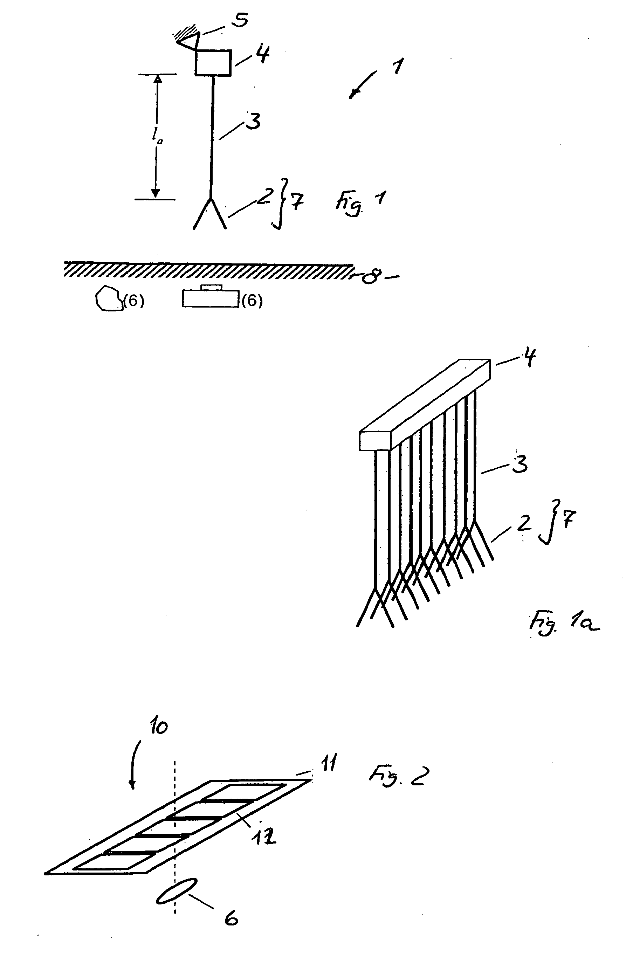

In Fig. 1 ist der prinzipielle Aufbau eines herkömmlichen Bodenradars 1 zur Detektion von vergrabenen Körpern 6, metallischer oder nichtmetallischer Art, in der Größe einer Landmine und / oder improvisierten Sprengfallen, dargestellt. Das Radar 1 besteht aus wenigstens einem Antennenelement 2, Versorgungskabeln 3 und einem Elektronikgehäuse 4 mit einer Aufhängung 5. Dabei bilden die Antennenelemente 2 die eigentliche Sende- und Empfangsteile 7 des Bodenradars 1. Die Antennenelemente 2 und Versorgungskabel 3 und deren mechanische Einbettung (nicht näher dargestellt) sind so aufgebaut, dass sie für die vom Boden 8 zurücklaufenden Radarechos nahezu reflexionsfrei durchlaufen werden. Um mögliche Reflexionen zu vermeiden, sollte der Abstand 2a des Elektronikgehäuses 4 (mit Aufhängung 5) vom Boden 8 derart gewählt werden, dass die Laufzeit der Echos vom Elektronikgehäuse 4 zurück zu den Antennenelementen 2 größer als der Zeitraum ist, über den die Echos aus dem Boden 8 beobachtet werden. Die Nutzsignale aus dem Boden 8 sind somit von den störenden Echos, verursacht durch die Bodenradarstrukturen, oberhalb des Bodens 8 zeitlich entkoppelbar. Fig. 1a zeigt eine Anzahl der Antennenelemente 2 zu einer Gruppe für eine größere bzw. breitere Detektionsbreite.

Fig. 2 zeigt eine Standardausführung eines Metalldetektors 10. Die Antennen sind hierbei Spulen 11, 12. Bei aktiven Systemen wird über wenigstens eine Erregerspule 11 ein magnetisches Wechselfeld erzeugt. Diese induziert in den zu detektierenden Objekten 6 Wirbelströme, wenn diese aus Metall sind. Die Magnetfelder dieser Wirbelströme werden ihrerseits wiederum von den Empfangsspulen 12 des Metalldetektors 10 empfangen. In bekannter Art und Weise können die Erregerspulen und Empfangsspulen dieselben sein. Auch können mehrere als eine gemeinsame Erregerspule 11 genutzt werden.

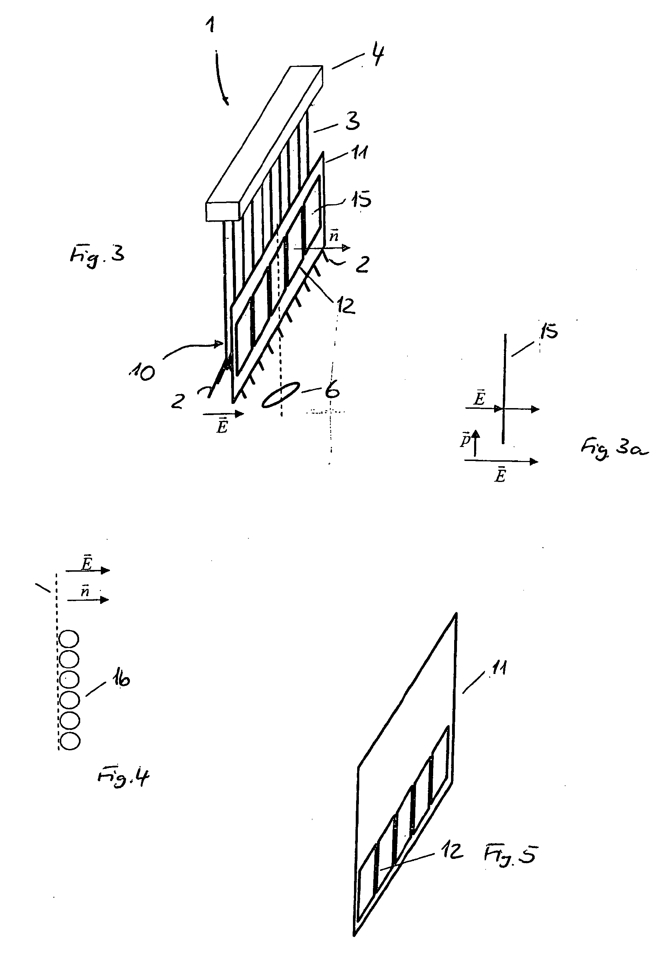

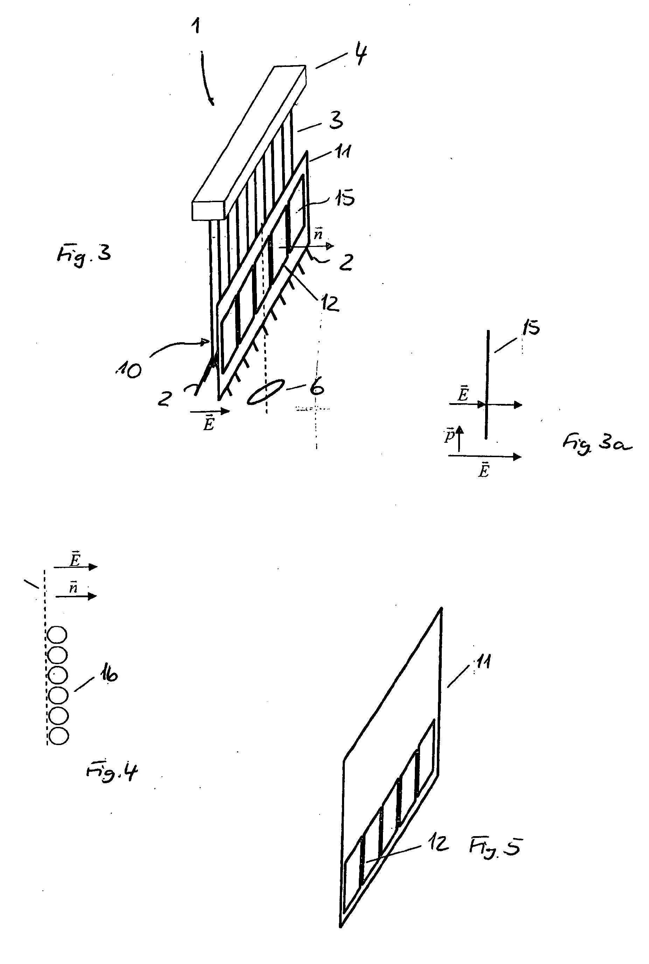

Fig. 3 zeigt nun das Bodenradar 1 und den Metalldetektor 10 als kombinierten Sensor 20. Dabei zeigt die Flächennormale *̅n̅*̅ des Metalldetektors 10 in Richtung der Polarisation der elektrischen Feldstärke *̅E̅*̅ des ausgesandten bzw. empfangenen Radarpulses. Die elektrischen Wellen breiten sich ungestört entlang einer dünnen Platte 15 aus, wenn der elektrische Feldstärkevektor *̅E̅*̅ senkrecht zur Platte 15 steht (Fig. 3a). Die Windungen der Metalldetektorspulen stellen dabei abschnittsweise eine leitende Platte 15 dar. Das zu detektierende Objekt 6 wird in dieser Anordnung in der Metalldetektor-Ebene erwartet. Diese Anordnung nutzt somit die Eigenschaft elektromagnetischer Wellen, sich ungestört entlang einer leitenden gegenüber Wellenlängen dünnen Platte 15 auszubreiten, wenn der elektrische Feldstärkevektor senkrecht Platte 15 steht. Die Windungen der Spulen 11, 12 des Metalldetektors 10 stellen dabei abschnittsweise eine leitende Platte 15 dar.

Bestehen die Spulen 11, 12 des Metalldetektors 10 aus mehr als einer Windung 16, sollte auch die Wickelart Berücksichtigung finden. Die Windungen 16 sollten in der Ebene des Metalldetektors 10 oder allgemein in einer Ebene senkrecht zur Polarisation des Radarpulses gewickelt sein. Dadurch kann die Eigenschaft der dünnen Platte 15 verbessert werden (Fig. 4).

In der aufgezeigten Anordnung wird der Metalldetektor 10 in einem Modus betrieben, bei dem das magnetische Feld der Erregerspule 11 außerhalb der Erregerspulenfläche mit der Entfernung zur Wicklung (stark) abnimmt, da in diesem Bereich die Felder von der oberen und unteren Spulenwindung entgegengerichtet sind. Dieser Modus reduziert zwar die Detektionsempfindlichkeit für tiefer liegende Objekte gegenüber einer flachen Metalidetektoranordnung, dieser Effekt wird jedoch schwächer je größer der Abstand der gegenüberliegenden Windungsteile der Erregerspule 11 ist. Es ist also darauf zu achten, dass die Erregerspule 11 über die Größe der Empfangsspulen 12 auszudehnen ist und letztere in der Nähe des unteren (objektnahen) Windungsteils der Erregerspule anzuordnen ist (Fig. 5).

Das Prinzip funktioniert auch für mehrere parallel liegende Platten 15. Die einzelnen Spulen 11, 12 des Metalldetektors 10 können daher auch in verschiedenen, parallel liegenden Ebenen angeordnet sein.

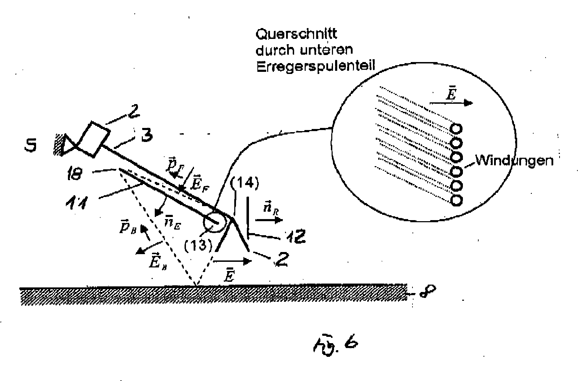

Fig. 6 zeigt eine Anordnung des Metalldetektors 10 mit Bodenradar 1 bei einer abweichenden Geometrie des Bodenradars 1 mit winkeliger Zuführung der Versorgungskabel 3. Auch hierbei kann das Prinzip beibehalten werden. Für die Empfangsspulen 12 gilt die senkrechte Ausrichtung der Spulenebene wie bei der geraden Bodenradarstruktur. Die Erregerspule 11 ist hierbei aus konstruktiven bzw. praktischen Gründen parallel zu den Versorgungskabeln 3 bzw. in der Haltestruktur des Bodenradars 1 angeordnet. Im Vergleich zur senkrechten Anordnung lassen sich hier einzelne Wicklungsabschnitte 13, 18 für den Fall, dass die Erregerspule 11 aus mehreren Windungen besteht, somit besser zum elektrischen Feld des Radarpulses ausrichten. Für den unteren Wicklungsabschnitt 13 in der Nähe der Radarantennenelemente 2 ist eine senkrechte Wicklungsebene günstig. Damit steht diese senkrecht zum elektrischen Feldstärkevektor *E̅_{B}* des Radarpulses. An der Stelle des oberen Wicklungsabschnitts 18 der Erregerspule 11 gelangen zwei Anteile des Radarpulses. Dies sind die vom Antennefußpunkt ausgehende direkte Strahlung mit Ausbreitungsrichtung *p̅_{F}* und elektrischen Feldstärkevektor *E̅_{F}*, sowie die vom Antennenfußpunkt ausgehende an der Bodenoberfläche reflektierte Strahlung mit Ausbreitungsrichtung *p̅_{B}* und elektrischem Feldstärkevektor *E̅_{B}*. Es hat sich daher als günstig erwiesen, den oberen Wicklungsabschnitt der Erregerspule 11 flach zu wickeln und in einer Wickelebene so anzuordnen, dass deren Flächennormale parallel zu *E̅_{F}* oder parallel zu *E̅_{B}* oder dazwischen liegt.

## Patentansprüche

1. Detektorvorrichtung mit wenigstens einem Bodenradar (1) sowie wenigstens einem Metalldetektor (10) zur Detektion von im Boden (8) befindlichen Körpern (6) metallischer als auch nichtmetallischer Art, insbesondere zur Detektion von Landminen und / oder Sprengfallen, wobei der Metalldetektor (10) wenigstens eine Spule (11) umfasst, und eine Platte (15) durch die Windungen der Spule (11) gebildet wird, wobei diese abschnittsweise eine leitende Platte (15) darstellt, **dadurch gekennzeichnet, dass** der Metalldetektor (10) senkrecht in der Bodenradarstruktur des Bodenradars (1) angeordnet ist, sodass die Flächennormale (*̅n̅*̅) des Metalldetektors (10) in Richtung der Polarisation der elektrischen Feldstärke (*̅E̅*̅) des ausgesandten bzw. empfangenen Radarpulses des Bodenradars (1) zeigt und sich die elektrischen Wellen ungestört entlang der Platte (15) oder mehrere parallel liegende Platten (15) des Metalldetektors (10) ausbreiten.

2. Detektorvorrichtung nach Anspruch 1, **dadurch gekennzeichnet, dass** das Bodenradar wenigstens ein Antennenelement (2), Versorgungskabel (3) und ein Elektronikgehäuse (4) mit einer Aufhängung (5) umfasst, wobei die Antennenelemente (2) die eigentliche Sende- und Empfangsteile (7) des Radars (1) bilden.

3. Detektorvorrichtung nach Anspruch 2, **dadurch gekennzeichnet, dass** der Metalldetektor (10) wenigstens eine Erregerspule (11) und eine Empfangsspule (12) umfasst.

4. Detektorvorrichtung nach Anspruch 3, **dadurch gekennzeichnet, dass** die Erregerspule (11) über die Größe der Empfangsspulen (12) ausgedehnt ist.

5. Detektorvorrichtung nach einem der Ansprüche 3 bis 4, **dadurch gekennzeichnet, dass** die Spulen (11, 12) des Metalldetektors (10) aus mehr als einer Windung bestehen, wobei die Windungen in der Ebene des Metalldetektors (10) oder allgemein in einer Ebene senkrecht zur Polarisation des Radarpulses gewickelt sein sollten.

6. Detektorvorrichtung nach einem der Ansprüche 3 bis 4, **dadurch gekennzeichnet, dass**, wenn die Erregerspule (11) parallel zu den Versorgungskabeln (3) bzw. in der Haltestruktur des Bodenradars (1) angeordnet ist, sich für den unteren Wicklungsabschnitt (13) in der Nähe der Radarantennenelemente eine senkrechte Wicklungsebene ergibt und den oberen Wicklungsabschnitt (18) der Erregerspule (11) flach zu wickeln und in einer Wickelebene so anzuordnen, dass deren Flächennormale parallel zum Feldstärkevektor (*E̅_{F}*) des elektrischen Feldes oder parallel zum Feldstärkevektor (*E̅_{B}*) des Radarpulses oder dazwischen liegt.

## Claims

1. Detector apparatus having at least one ground radar (1) and at least one metal detector (10) for detection of bodies (6) of a metallic and non-metallic nature which are located in the ground (8), in particular for detection of land mines and/or explosive devices, the metal detector (10) comprising at least one coil (11), and a plate (15) being formed by the turns of the coil (11), the latter partially representing a conducting plate (15), **characterized in that** the metal detector (10) is arranged vertically in the ground radar structure of the ground radar (1) such that the surface normal (*̅n̅*̅) of the metal detector (10) points in the direction of the polarization of the electrical field strength (*̅E̅*̅) of the emitted or received radar pulse of the ground radar (1), and the electrical waves propagate without disturbance along the plate (15) or a plurality of parallel plates (15) of the metal detector (10).

2. Detector apparatus according to Claim 1, **characterized in that** the ground radar comprises at least one antenna element (2), supply cables (3) and an electronics housing (4) with a suspension (5), the antenna elements (2) forming the actual transmitting and receiving parts (7) of the radar (1).

3. Detector apparatus according to Claim 2, **characterized in that** the metal detector (10) comprises at least one exciter coil (11) and one receiving coil (12).

4. Detector apparatus according to Claim 3, **characterized in that** the exciter coil (11) is extended over the size of the receiving coils (12).

5. Detector apparatus according to one of Claims 3 to 4, **characterized in that** the coils (11, 12) of the metal detector (10) consist of more than one turn, in which case the turns should be wound in the plane of the metal detector (10) or in general in a plane at right angles to the polarization of the radar pulse.

6. Detector apparatus according to one of Claims 3 to 4, **characterized in that** when the exciter coil (11) is arranged parallel to the supply cables (3) or in the holding structure of the ground radar (1) this gives rise to a vertical winding plane for the lower winding section (13) in the vicinity of the radar antenna elements in order to wind the upper winding section (18) of the exciter coil (11) flat and arrange it in a winding plane such that the surface normal thereof is situated parallel to the field strength vector (*E̅_{F}*) of the electrical field or parallel to the field strength vector (*E̅_{B}*) of the radar pulse, or therebetween.

## Revendications

1. Dispositif de détection comprenant au moins un radar au sol (1) ainsi qu'au moins un détecteur de métaux (10) pour la détection de corps (6) de nature métallique ainsi que non métallique qui se trouvent dans le sol (8), notamment pour la détection de mines anti-personnelles et/ou de pièges explosifs, le détecteur de métaux (10) présentant au moins une bobine (11) et une plaque (15) étant formée par les enroulements de la bobine (11), celle-ci représentant dans certaines portions une plaque conductrice (15), **caractérisé en ce que** le détecteur de métaux (10) est disposé verticalement dans la structure de radar au sol du radar au sol (1), de sorte que la normale à la surface (*̅n̅*̅) du détecteur de métaux (10) est dirigée dans le sens de la polarisation de l'intensité de champ électrique (*̅E̅*̅) de l'impulsion radar émise ou reçue du radar au sol (1) et les ondes électriques se propagent sans perturbation le long de la plaque (15) ou de plusieurs plaques (15) posées en parallèle du détecteur de métaux (10).

2. Dispositif de détection selon la revendication 1, **caractérisé en ce que** le radar au sol comprend au moins un élément d'antenne (2), un câble d'alimentation (3) et un boîtier électronique (4) muni d'une suspension (5), les éléments d'antenne (2) formant les parties d'émission et de réception (7) proprement dites du radar (1).

3. Dispositif de détection selon la revendication 2, **caractérisé en ce que** le détecteur de métaux (10) comprend au moins une bobine excitatrice (11) et une bobine réceptrice (12).

4. Dispositif de détection selon la revendication 3, **caractérisé en ce que** la bobine excitatrice (11) est étalée sur la taille des bobines réceptrices (12).

5. Dispositif de détection selon l'une des revendications 3 à 4, **caractérisé en ce que** les bobines (11, 12) du détecteur de métaux (10) se composent de plus d'un enroulement, les enroulements devant être bobinés dans le plan du détecteur de métaux (10) ou, de manière générale, dans un plan perpendiculaire à la polarisation de l'impulsion radar.

6. Dispositif de détection selon l'une des revendications 3 à 4, **caractérisé en ce que** lorsque la bobine excitatrice (11) est disposée en parallèle avec les câbles d'alimentation (3) ou dans la structure de maintien du radar au sol (1), il en résulte pour la portion de bobinage inférieure (13) à proximité des éléments d'antenne radar un plan de bobinage vertical, afin de bobiner à plat la portion de bobinage supérieure (18) de la bobine excitatrice (11) et de la disposer dans un plan de bobinage de telle sorte que la normale de sa surface est parallèle au vecteur d'intensité de champ (*E̅_{F}*) du champ électrique ou parallèle au vecteur d'intensité de champ (*E̅_{B}*) de l'impulsion radar ou se trouve entre ceux-ci.
